# EUROPEAN PATENT APPLICATION

(11) **EP 3 367 545 A1**
(43) Date of publication of application: **29.08.2018**
(21) Application number: 18157579.6
(22) Date of filing: 20.02.2018
(51) Int. Cl.: H02K 9/18

(54) **COOLING APPARATUS FOR AN ELECTRIC MACHINE**

(30) Priority: 22.02.2017 US 201715439214
(71) Applicant: General Electric Company, Schenectady, NY 12345 (US)
(72) Inventor: HANGARI, Vishwanath U., 500081 Hyderabad (IN); BITTERMANN, Mathieu, 54250 Champigneulles (FR)
(74) Representative: Fischer, Michael Maria

(57) **Abstract**

Provided is a cooling apparatus (200) for an electric machine (100) combined with an external fan (110) or blower that includes a plurality of cooler tubes (205) or plates (605, 607) spaced a predetermined distance apart within a chamber (202) of the cooling apparatus (200). Internally circulating air of the electric machine (100) flows through the cooler tubes (205) and externally circulating air flows over the cooler tubes (205) in a direction perpendicular or opposite that of the internally circulating air perform the cooling process. The velocity of externally circulated air is increased using cones (220) and thus the Venturi effect is created. The fresh air enters the cooling apparatus (100) from the adjacent openings (210) due to Venturi effect and the total mixed air at lower temperature flows over the reminder of the tubes (205) or plates (605, 607) to cool the internal circuit air, thus improves the cooler efficiency.

## Description

### TECHNICAL FIELD

The present invention relates generally to a cooling of electric rotating machines. In particular, the present invention relates to a device to enhance cooling and performance of the electric machine using a Venturi effect.

### BACKGROUND

A device, such as an electric machine can employ a closed air - circuit air cooling system or air-to-air heat exchange type cooling system which is used for cooling internal air of the electric machine.

The cooling system typically includes an internal (primary) circuit air flow over a plurality of cooler pipes (e.g., tubes) from a shaft-mounted fan or blower and an external (secondary) circuit air flow through the cooler tubes using ambient air. The external fan or blower is often attached to one end of the motor and the air is blown over the plurality tubes of a cooler. The secondary air (i.e., coolant) absorbs heat from primary air as it reaches an air outlet at an end opposite the air inlet.

However, the re-cooled air temperature difference between the air inlet side and the air outlet side is relatively high. The heat exchange occurring between the internal air and the external air causes this temperature difference which restricts the operation of the electric machine and the maximum achievable rating thereof.

### SUMMARY OF THE EMBODIMENTS

Given the aforementioned deficiencies, a need exists for a more efficient cooling apparatus and cooling process of electric machines (e.g., motors or generators).

Under certain circumstances, embodiments of the present invention provides a cooling apparatus that includes a plurality of air openings external to a plurality of cooler tubes and a plurality of air cones in communication with the air openings to employ the *Venturi effect* allowing fresh air to flow over the tubes in the air flow direction from the air inlet to the air outlet end.

Further, embodiments of the present invention provide a method that includes circulating the internal (primary) air circuit through the plurality of cooler tubes and the external (secondary) air circuit over the plurality of cooler tubes in order to reduce the temperature difference in the re-cooled air from the air inlet to the air outlet end.

In addition, embodiments of the present invention, provide cones in the secondary air path, reducing the cross sectional area available for the secondary air flow and thus increases the air velocity. This increase in velocity creates a Venturi effect due to which the fresh air from the plurality of open areas provided next to the cones enters the cooler and mix with the air coming from the fan or blower.

According to yet another embodiment, a cooling apparatus is provided that includes a plurality of alternate cooler plates for unilateral or bi-lateral internal (primary) air circuit and a fan or blower for external (secondary) air circuit.

The foregoing has broadly outlined some of the aspects and features of various embodiments, which should be construed to be merely illustrative of various potential applications of the disclosure. Other beneficial results can be obtained by applying the disclosed information in a different manner or by combining various aspects of the disclosed embodiments. Accordingly, other aspects and a more comprehensive understanding may be obtained by referring to the detailed description of the exemplary embodiments taken in conjunction with the accompanying drawings, in addition to the scope defined by the claims.

### DESCRIPTION OF THE DRAWINGS

FIG. 1 is a schematic illustrating an electric machine including a cooling apparatus that can be implemented within one or more embodiments of the present invention. Cones and opening provided at the top or sides of the cooler.
FIG. 2 is a sectional view of the cooling apparatus of FIG. 1 at A-A' that can be implemented within one or more embodiments of the present invention.
FIG. 3 is a schematic illustrating an electric machine including a cooling apparatus that can be implemented within one or more other embodiments of the present invention. Cones and opening provided at the sides of the cooler.
FIG. 4 is a sectional view of the cooling apparatus of FIG. 3 at A-A' that can be implemented within one or more embodiments of the present invention.
FIGS. 5A, 5B, 5C and 5D are schematics illustrating various types of cooler tubes that can be implemented within one or more embodiments of the present invention.
FIGS. 6A and 6B are a schematic view of cooling apparatus and a sectional view of the cooling apparatus of FIG. 6A, respectively, that can be implemented within one or more other embodiments of the present invention using plates in place of tubes.
FIGS. 7A and 7B are a schematic view of cooling apparatus and a sectional view of the cooling apparatus of FIG. 7A, respectively, that can be implemented within one or more other embodiments of the present invention.
FIGS. 8A, 8B and 8C are the schematic view comprising cooler with plates and air cones and adjacent air openings.
FIG. 9 is a schematic view of machine cooler for a unilateral internal air circuit and cooler tubes with air cones and openings in secondary air circuit, according to one or more other embodiments of the present invention.

The drawings are only for purposes of illustrating preferred embodiments and are not to be construed as limiting the disclosure. Given the following enabling description of the drawings, the novel aspects of the present disclosure should become evident to a person of ordinary skill in the art. This detailed description uses numerical and letter designations to refer to features in the drawings. Like or similar designations in the drawings and description have been used to refer to like or similar parts of embodiments of the invention.

### DETAILED DESCRIPTION OF THE EMBODIMENTS

As required, detailed embodiments are disclosed herein. It must be understood that the disclosed embodiments are merely exemplary of various and alternative forms. As used herein, the word "exemplary" is used expansively to refer to embodiments that serve as illustrations, specimens, models, or patterns. The figures are not necessarily to scale and some features may be exaggerated or minimized to show details of particular components.

In other instances, well-known components, systems, materials, or methods that are known to those having ordinary skill in the art have not been described in detail in order to avoid obscuring the present disclosure. Therefore, specific structural and functional details disclosed herein are not to be interpreted as limiting, but merely as a basis for the claims and as a representative basis for teaching one skilled in the art.

As noted above, the embodiments provide a cooling apparatus for example a closed-air circuit-air type cooling apparatus that is implemented within an electric machine (e.g., a motor or generator). The cooling medium of the present invention may be that of air, water, or any other type of cooling medium as desired for the suitable purposes thereof.

The cooling apparatus employs the Venturi effect, and mixes the air coming from the external fan attached to the electric machine with fresh air at an ambient temperature to reduce the mixed air temperature of the motor and increases the volume of air which is guided to an air outlet resulting in the reduction of air temperature at the air outlet.

According to embodiments of the present invention, the cones increase the secondary air velocity and create the Venturi effect due to which the fresh air enters the openings from outside at an ambient temperature and mixes with the secondary air which has already become hot by absorbing heat form the internal air circuit. The mixed air is then circulated at a lower temperature for the remaining part of the secondary air circuit.

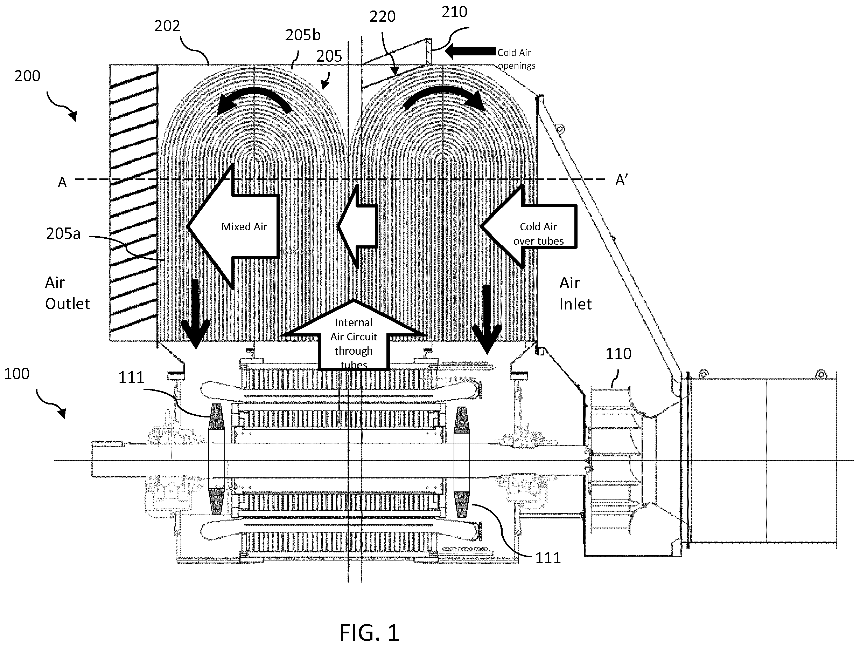

FIG. 1 is a schematic illustration of an electric machine 100 including a cooling apparatus 200 that can be implemented within one or more embodiments of the present invention. The electric machine 100 is an electric motor in this example. However, the cooling apparatus of the present invention may be implemented within generators or any other machine requiring cooling to maintain performance thereof.

As further shown in FIG. 1, the cooling apparatus 200 is attached to the electric motor 100. The cooling apparatus 200 includes a chamber 202, a plurality of cooler tubes 205, a plurality of cold air openings 210 and a plurality of air cones 220. FIG. 1 shows one air opening 210 and one air cone 220 only for purposes of explanation. The present invention, however, is not limited to any particular number of air openings 210 or air cones 220.

Also shown in this embodiment, the chamber 202 includes the cooler tubes 205. The cooler tubes 205 include a plurality of cooler tubes 205a disposed in a vertical direction facing the electric machine 100. The plurality of cooler tubes 205a receives the internal air circulating therethrough (as indicated by the arrows), which is the primary air flow coming from the electric machine 100. This results from air flow from an internal fan or blower 111, attached to the electric machine 100.

According to an embodiment, the cooler tubes 205 further include circular cooler tubes 205b at a top surface which further circulates the internally circulating air through the cooler tubes 205a. The present invention, however, is not limited to the cooler tubes 205 being arranged in a vertical or circular direction, and therefore may vary in any direction as desired. According to one or more embodiments, cooler tubes 205a and 205b are equal in number to facilitate smooth air flow through tubes. However, it is not a must to have equal number of tubes as long as the required area is made available for the air flow path.

Further, externally circulating air, including cool ambient air, enters at an air inlet end which also receives air for the fan or blower 110. The externally circulating air flows over cooler tubes 205 in a horizontal direction perpendicular to the direction of the vertical direction of the cooler tubes 205a. The external air absorbs the heat as it reaches the mid-section of the cooling apparatus 200.

Further, the cones 220 provided in the secondary air path reduce the cross sectional area for the secondary air flow path and thus increases the secondary air flow velocity. This increase in velocity creates the Venturi effect and the fresh air enters through the openings 210.

According to one or more embodiments, unlike that of the conventional art, the internally circulating air travels through the cooler tubes 205 while the externally circulating air travels over the cooler tubes 205. Therefore, the heat exchange taking place further reduces the re-cooling temperature difference from the air inlet end to the air outlet end of the cooling apparatus 200.

Also shown, at least one air opening 210 is positioned at a top surface of the chamber 205 above the cooler tubes 205. The air opening 210 works in communication with a corresponding air cone 220, positioned adjacent thereto, to force cold air through the remainder part of the cooler tubes 205. The angle of cone depends on the air velocity increase desired. The desired air velocity increase at the air exit end of the cone is of the order of 1.5 to 3.5 times the velocity of air before the start of the cone. As an example, the secondary air entering from fan 110 is the ambient air at say 40°C. As it travels and exit the cone, would absorb primary air heat and may become like 50°C. Due to the Venturi effect, the fresh air at 40°C will enter from the opening 210 adjacent to the cone. The volume of air entering at 210 depends on the velocity of secondary air at the cone (220) exit. The air volume at cone 220 exit at say 50°C and fresh air entered at 210 at 40°C will mix based on the volume of air from the air opening 210 and the total air at reduced temperature than 50°C at cone exit are available for cooling the primary air for the reminder of the secondary air flow path. The area provided at the air opening 210 will ensure the velocity of fresh air enters at approximately 2-5 meters per second.

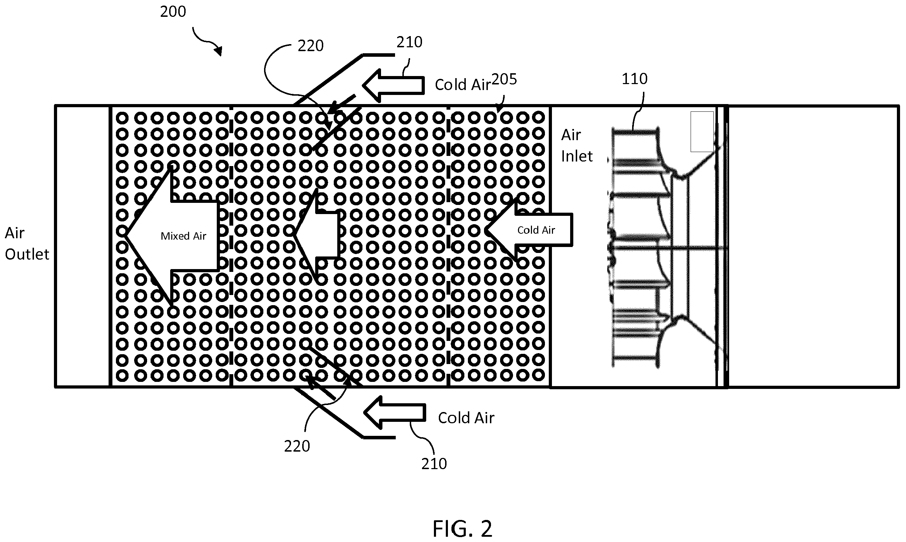

FIG. 2 is a sectional view A-A of the cooling apparatus 200 of FIG. 1. As shown in the sectional view, cold air of the externally circulating air enters the air inlet from the fan 110. As the air exits the cone 220, the velocity of air increases. This increase in velocity creates the Venturi effect and thus the fresh air enters from adjacent opening 210. The fresh air is to be inserted in the mid-section of the cooling apparatus 200 and further mixed with the air over the remainder of the cooler tubes 205, which exits at the air outlet end. The mixed air is therefore cooler and the temperature difference from the air inlet end to the air outlet end is reduced.

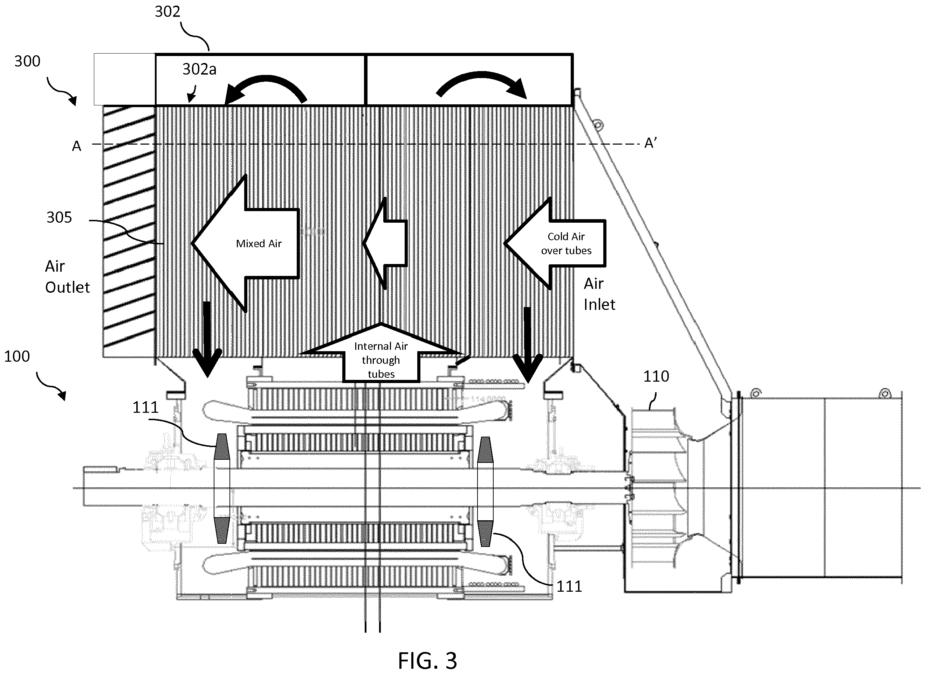

The present invention is not limited, however, to any particular type of configuration for the cooling apparatus. Accordingly, other variations of the cooling apparatus will now be described below with reference to FIGS. 3 through 7B.

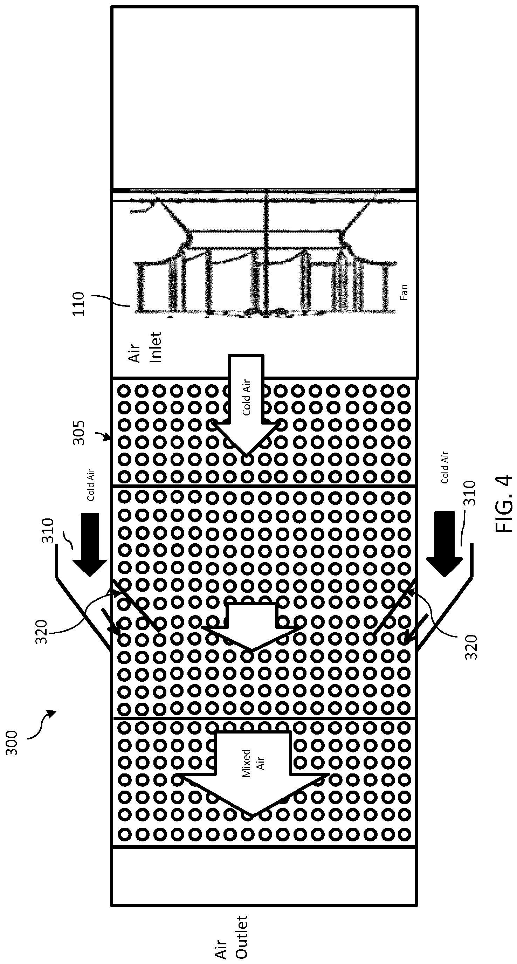

As shown in FIG. 3, the cooling apparatus 300 includes a cooling chamber 302 including a plurality of separate sub-cooling chambers 302a, a plurality of cooler tubes 305, air openings 310 (FIG. 4) and air cones 320 (FIG. 4). The cooling apparatus 300 is attached to the electric machine 100, which also includes a fan 110 attached to one end thereof.

According to an embodiment, the cooler tubes 305 include a groups of vertically arranged tubes within separate closed sub-cooling chambers 302a. In this embodiment, the tube height of each cooler tube 305 is increased in comparison the cooler tubes 205, as depicted in FIG. 1.

As further shown, the internal air circulates through the mid-section of the groups of cooler tubes 305 and circles around at the top end of the separate closed sub-cooling chambers 302a. The internal air then recirculates back into the electric machine 100. The externally circulating air simultaneously supplies cold air over the cooler tubes 305 in a direction perpendicular to the direction of that of the internal air circuit.

In addition, the cones 320 increase the velocity of secondary air coming from fan 110 and thus Venturi effect is created. The air opening 310 adjacent to cones 320 allows fresh cold air to enter at a mid-section of the cooler tubes 305. The cold air then mixes with the air within the remainder of the cooler tubes 305 and exits via the air outlet end, opposite the air inlet end.

FIG. 4 is a sectional view A-A of the cooling apparatus 300 shown in FIG. 3. As shown, the cold air enters the cooling apparatus from multiple directions to cool the cooler tubes. The externally circulating air receives air from the fan 110 and travels over the cooler tubes 305. The air cone 320 increases the air flow velocity and thus due to Venturi effect, the fresh air enters through air opening 310, at the direction of the air cone 320. The cold air, thus further mixes with the air of the remainder part of the cooler tubes 305 and is then released through the air outlet.

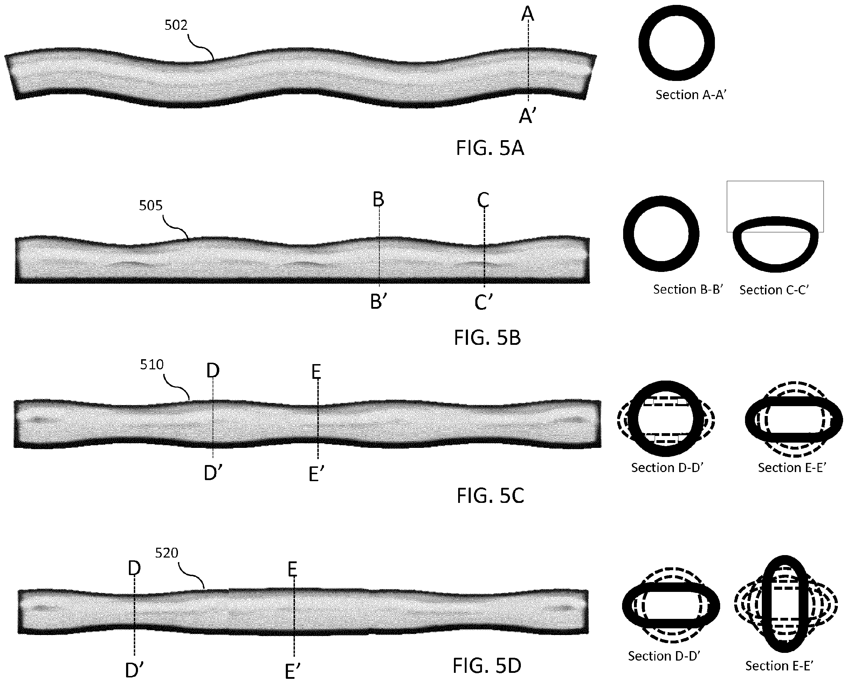

The cooler tubes shown in FIGS. 1-4 are not limited to any particular shape and/or size, and can vary to further enhance the air flow and velocity through, and over, the cooler tubes within the cooling apparatuses. FIGS. 5A, 5B, 5C and 5D illustrate different variations of cooler tubes that can be implemented within embodiments of the present invention to create a turbulent air flow through and over the tubes.

As shown in FIG. 5A, the cooler tube 502 is a tube bent at equal intervals to further enhance the heat transfer for flow of air within or over the cooler tubes from the internal or external air circuit, as shown in section A-A.

In FIG. 5B, the cooler tube 505 is pressed on one side at equal intervals as shown in sections B-B' and C-C', to enhance the heat transfer for the flow of air over or within the cooler tubes from the internal or external air circuit.

FIG. 5C includes a cooler tube 510 that is pressed from two sides at equal intervals in sections D-D' and E-E' to further decrease the radius of the cooler tubes at the equal intervals. The cooler tube 510 further enhances the heat transfer for the flow of air over or within the cooler tubes from the internal or external air circuit.

FIG. 5D includes a cooler tube 520 that is pressed from two sides at equal intervals at sections D-D' and E-E' but alternate press of tube horizontally and vertically to further decrease the radius of the cooler tubes at equal intervals. The cooler tube 510 further enhances heat transfer for the flow of air over or within the cooler tubes from the external or internal air circuit.

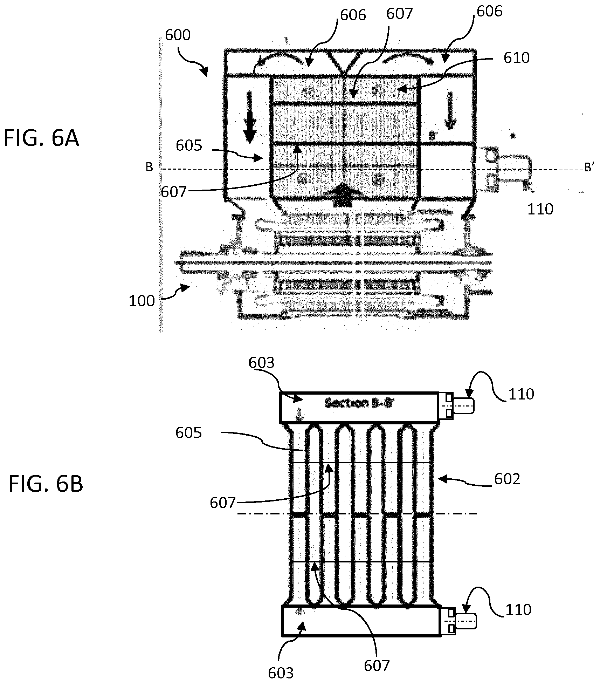

FIGS. 6A and 6B are a schematic view of a cooling apparatus 600 and a sectional view, respectively, according to additional embodiments of the present invention. The cooling apparatuses of the present invention are not limited to employ cooler tubes and can alternatively include cooler plates for unilateral or bilateral cooling.

As shown in FIG. 6A, the cooling apparatus 600 includes cooler plates 605 and is attached to an electric machine 100 including a fan or blower 110 mounted on shaft of 100 or blower with the direction of secondary air opposite to that of as shown in FIG 1 or FIG 3. The cooler plates 605 create the separation of primary air and secondary air and allow heat exchange happening between primary airs received internally on one side of the plate 605 circulating air unilaterally or bilaterally and recirculate through the cooling apparatus 600, toward the electric machine 100. The primary air enters the plurality of plates 605 and enters chamber 606 from where it recirculates to machine 100 through internal fan or blower 111. The secondary air is made to pass through the other side of the plates 605 through fan or blower 110. The fan or blower is attached to the one or both ends, or front of the chamber 603 provided at the bottom of the apparatus 600 on either sides. The opening 610 is provided on either side of the apparatus 600 at the top of the cooler allowing the secondary air to enter the cooler plates 605 from top and travel through the plates 605 vertically downward and guided by the plurality of barrier plates 607 to enter the chamber 603 and exit at the fan end 110. FIG. 6B illustrates the B-B' section of FIG. 6A including the physical configuration of the cooler plates 605. The apparatus 600 contains sub-cooling chambers 602 to have a common internal air path through one side of plates 605 and plurality of secondary air circuits on the other side of plates 605 on either side of the apparatus 600 of the machine 100.

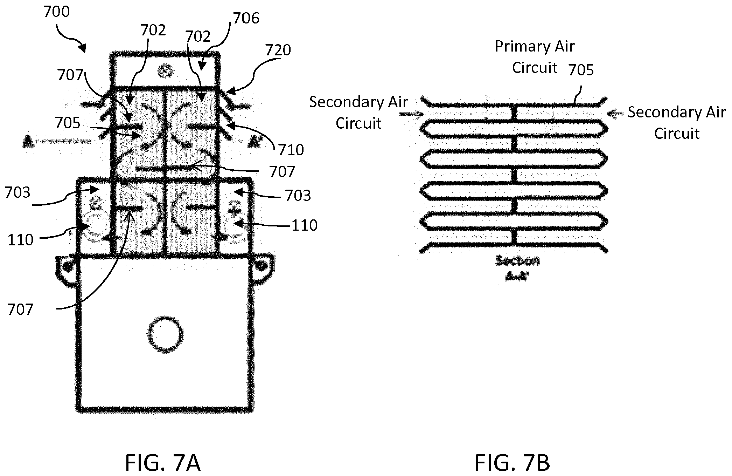

Further still, in FIGS. 7A and 7B a schematic view of a cooling apparatus 700 and a sectional view thereof are shown which can be implemented within one or more other embodiments of the present invention. The cooling apparatus 700 further includes a plurality of cooler plates 705 formed within separate sub-cooling chambers 702. The cooler plates 705 perform unilateral or bilateral cooling of an electric machine, such as the electric machine 100. The cooling apparatus 700 further communicates with a plurality of fans or blowers 110 to receive and recirculate air through the cooler plates 705.

The cooling apparatus 700 further includes at least one air opening 710 to receive the cold air (secondary air) to come in contact on one side of plates 705 within the cooling apparatus 700 and connected to chamber 703. The fan 110 is connected to one or both sides or front of the chamber 703. The secondary air entered at the opening 710 is made to pass through one side of cooler plates 705 of each sub-chamber 702 and travel down guided by the plurality of barrier plates 707 and enter chamber 706 and exit at the fan end of chamber 703. The primary air (internal) circulates inside the machine 100 unilaterally or bi-laterally and come in contact with other side of the plates 705. The two sub-chambers 702 placed so as to have a common internal air path and separate external air path to increase the heat exchange and improve cooler efficiency. The air openings 710 further include air cones 720 to direct the cold air received within the air openings 710. The plates 707 added in the secondary air path to further increase the air path turbulence and enhance the heat exchange.

FIG. 7B further illustrates the sub-chambers 702 connected to form a common primary air path to come in contact with one side of the cooler plates 705 and air flow via the internally circulating air and multiple secondary air circuits to come in contact with other side of cooler plates 705 of the externally circulating air of the cooling apparatus 700 shown in FIG. 7A.

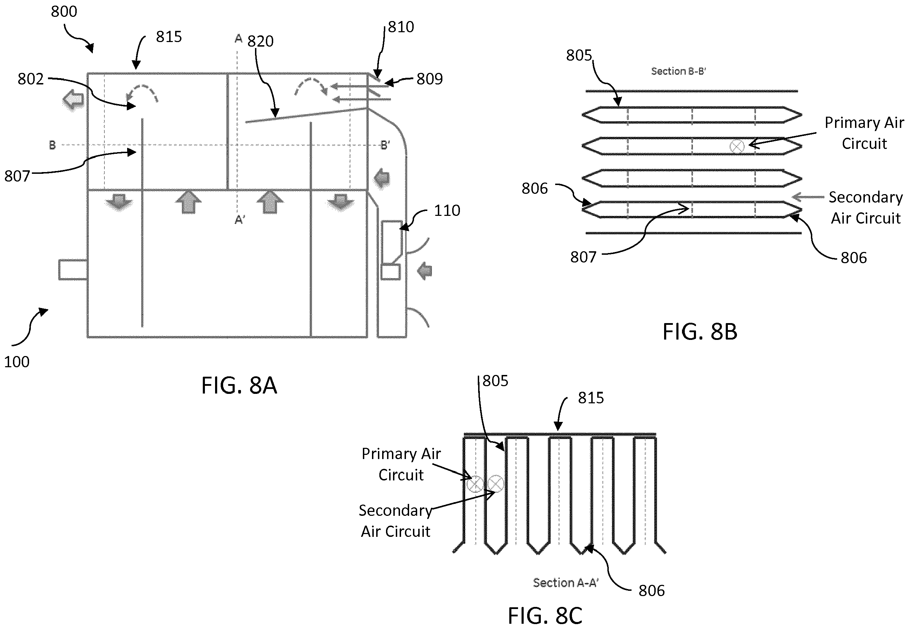

As further shown in FIG. 8A, the cooling apparatus 800 is attached to the electric motor 100. The cooling apparatus 800 includes a chamber 802, a plurality of cooler plates 805, a plurality of cold air openings 809 guided by plurality of plates 810 and a plurality of air cones 820. FIG. 8A shows one air opening 809 and one air cone 820 only for purposes of explanation. The present invention, however, is not limited to any particular number of air openings 809 or air cones 820. The air cones 820 increases the velocity of secondary air coming from fan or blower 110 and create the Venturi effect allowing fresh air to enter the air opening 809. The mixed total air at lower temperature now available for the reminder of the cooler plates to reduce the re-cooled primary air temperature and improve cooler efficiency.

FIG. 8B is a sectional view B-B' of FIG. 8A further illustrates the arrangement of plurality of cooler plates 805, plurality of air guide plates for primary circuit 807 and plurality of air inlet or outlet guides 806 for primary or secondary air inlet in to the cooler 800.

As further shown in FIG 8C, the sectional view A-A' of FIG. 8A, the primary and secondary air circuits are separated from each other by plurality of plates 805, plurality of air inlet guide 806 and plurality of top or side barriers 815.

The embodiments of cooler 800 as shown in FIG. 8A may further be constructed using plurality tubes in place of plates carrying primary air through the tubes placed vertically or horizontally circulated by using fan or blower 111 and secondary air flowing over the tubes blown by shaft mounted fan or independent blower 110.

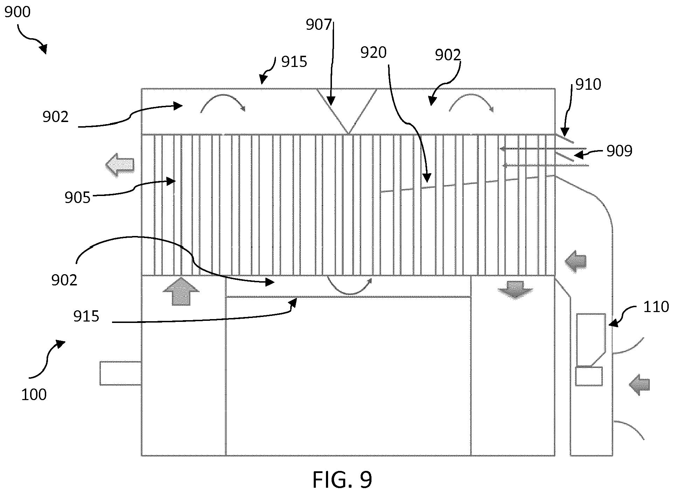

As shown in FIG. 9, the cooler 900 constructed using tubes 905 may further modified for unilateral primary air circuit by re-arranging the barrier guides 907 and creating plurality of chambers 902 and plurality of air barriers 915. The primary air flows through the cooler tubes 905 from a fan or blower 111 and secondary air is blown by a fan or blower 110 in opposite direction to the internal air flows over the tubes. Air cones 920 increase the velocity of air coming from 110 and create the Venturi effect which allows fresh air to enter from air opening 909 guided by plates 910. The mixed air at lower temperature passes through the reminder of tubes 905 and improves the cooler efficiency.

The embodiments of cooler 900 may further be constructed using plates in place of tubes which separate the primary and secondary air circuit and exchange heat from primary air to secondary air.

Embodiments of the present invention provide a cooling apparatus and process that increase the rating and power density of the electric machine by reducing hot spot temperature of any component/assembly of the electric machine. The reduction in air temperature thereby improves the reliability of the electric machine.

This written description uses examples to disclose the invention including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A cooling apparatus (200) for an electric machine combined with an external fan (110) or blower or including a fan (110) or blower, the cooling apparatus (200) comprising:
a plurality of cooler tubes (205) spaced a predetermined distance apart within a chamber (202) of the cooling apparatus (200),
wherein internally circulating air of the electric machine (100) flows through the cooler tubes (205) and externally circulating air flows over the cooler tubes (205) in a direction opposite or perpendicular to that of the internal air circuit.

2. The cooling apparatus (200) of claim 1, further comprising:
a plurality of air cones (220) for increasing air velocity to create Venturi effect and receiving air from the plurality of adjacent openings (210). The mixed air flow over the reminder of the cooler tubes (205) prior to reaching an air outlet end opposite an air inlet end receiving air from the fan (110) or blower.

3. The cooling apparatus (200) of claim 1 or 2, wherein the cooler tubes (205) are disposed in a vertical direction facing the electric machine (100) to receive the internal air circuit therethrough as a result of air flow from the fan (110) or blower.

4. The cooling apparatus (200) of claim 3, wherein the cooler tubes further include a plurality of circular cooler tubes (205) at a top surface of the cooling apparatus (200) and connected to the cooler tubes (205) disposed in a vertical direction, and configured to circulate the internally circulating air through the cooler tubes (205) disposed in the vertical direction.

5. The cooling apparatus (200) of any of claims 3 or 4, wherein the forced air through the air openings absorbs heat as it reaches a mid-section of the cooling apparatus (200).

6. The cooling apparatus (200) of any of claims 3 to 5, wherein the externally circulating air enters the air inlet and travels over the cooler tubes (205), and the forced air is mixed with the air over the reminder of the cooler tubes (205) via performance of the Venturi effect.

7. The cooling apparatus (300) of claim 1, the electric machine including a fan (110) or blower, comprising:
a plurality of separate sub-cooling chambers (302); wherein
the plurality of cooler tubes (305) are separated into groups of cooler tubes (305) and each group is disposed within a separate sub-cooling chamber (305),
wherein the internally circulating air of the electric machine (100) travels through a mid-section of the groups of cooler tubes (305) and circles around at the top end of the separate closed sub-cooling chambers (302) and recirculates back into the electric machine (100), and
wherein externally circulating air receives cold air from the fan (110) or blower and simultaneously supplies cold air over the cooler tubes (302) in a direction perpendicular to the direction of that of the internal air circuit.

8. The cooling apparatus (300) of claim 7, wherein the cooler tubes (305) comprises groups of vertically arranged tubes (305 within each separate, closed, sub-cooling chambers (302).

9. The cooling apparatus (300) of claim 8, further comprising:
a plurality of air openings (310) configured to receive cold air at a mid-section of the cooler tubes (302); and
a plurality of air cones (320) each corresponding to an air opening (310), and configured to direct the cold air received through the respective air opening (310), wherein the cold air then mixes with the air within the remainder of the cooler tubes (305) and exits via an air outlet end opposite an air inlet end.

10. The cooling apparatus (300) of claim 9, wherein the externally circulating air receives air from the fan (110) or blower and travels over the cooler tubes (305) while the cold air forced into the air openings (310) at the direction of the air cone (320) further mixes with the air of the remainder part of the cooler tubes (305) and is then released through the air outlet end.

11. The cooling apparatus of claim 9 or 10, wherein each cooler tube (305) is a tube bent at equal intervals to facilitate the turbulent flow of air within the cooler tubes (305) from the internally or externally circulating air.

12. The cooling apparatus of claim 9 or 10, wherein each cooler tube (305) is pressed on one side at equal intervals to facilitate the turbulent flow of air through or over the cooler tubes (305) from the internal and external air circuit.

13. The cooling apparatus of claim 9 or 10, wherein each cooler tube (305) is pressed from two sides at equal intervals to further decrease a radius of the cooler tube (305) at the equal intervals and to facilitate the turbulent flow of air though or over the cooler tubes (305) from the internal or external air circuit.

14. The cooling apparatus of claim 9 or 10, wherein each cooler tube (305) is pressed from two sides at equal intervals to further decrease a radius of the cooler tube (305) at the equal intervals one in horizontal direction and one in vertical direction and to facilitate the turbulent flow of air though or over the cooler tubes (305) from the internal or external air circuit.
